# FASCICULE DE BREVET EUROPEEN

(11) **EP 2 635 103 B1**
(45) Date de publication et mention de la délivrance du brevet: **20.01.2016**
(21) Numéro de dépôt: 11802460.3
(22) Date de dépôt: 02.11.2011
(51) Int. Cl.: A01C 7/08, A01C 7/20, A01B 73/04, A01C 7/04

(54) **SEMOIR MONOGRAINE AVEC UN CHASSIS REPLIABLE ET AU MOINS UNE TETE DE REPARTITION DISPOSEE A L'ARRIERE DU SEMOIR**
EINZELSAMEN-SÄMASCHINE MIT FALTBAREM RAHMEN UND MINDESTENS EINEM VERTEILUNGSKOPF AM HINTEREN TEIL DER SÄMASCHINE
SINGLE-SEED SEEDER HAVING A COLLAPSIBLE FRAME AND AT LEAST ONE DISTRIBUTION HEAD ARRANGED AT THE REAR OF THE SEEDER

(30) Priorité: 04.11.2010 FR 1059088
(43) Date de publication de la demande: 11.09.2013
(73) Titulaire: KUHN S.A., 67700 Saverne (FR)
(72) Inventeur: AUDIGIE, Jean-Charles, 67330 Bouxwiller (FR); RENAULT, Stéphane, 67310 Allenwiller (FR); KAUFF, Martin, 67700 Wolschheim (FR)
(74) Mandataire: Esch, Esther Evelyne
(86) Numéro de dépôt international: PCT/FR2011/052556
(87) Numéro de publication internationale: WO 2012/059686

(56) Documents cités:
- EP-A1- 0 873 675
- DE-A1- 19 833 691

## Description

La présente invention se rapporte au domaine technique général du machinisme agricole. L'invention concerne un semoir monograine avec un châssis repliable composé d'un tronçon central disposé transversalement par rapport à la direction de travail et de deux tronçons latéraux articulés sur le tronçon central, des éléments semeurs étant répartis de manière régulière sur ledit châssis, ledit semoir comportant des enfouisseurs pour la distribution de produit s'étendant sensiblement à l'avant d'un élément semeur respectif, au moins une tête de répartition et des tuyaux raccordés sur ladite au moins une tête de répartition et aboutissant auxdits enfouisseurs.

De tels semoirs repliables avec une distribution d'engrais sont connus. Avec un châssis repliable, la distribution d'engrais se fait de manière pneumatique en utilisant une tête de répartition. Le châssis supporte des éléments semeurs et des enfouisseurs situés à l'avant des éléments semeurs. Les tronçons latéraux peuvent être repliés vers le haut de manière à respecter le gabarit de transport pour circuler sur les routes. La tête de répartition est généralement positionnée sur le tronçon central au voisinage du plan vertical médian du châssis. Les tuyaux raccordant la tête de répartition aux enfouisseurs s'étendent aussi dans cette zone centrale. La turbine permettant la distribution des graines qui est entraînée par la prise de force du tracteur se trouve aussi dans cette zone. Cette position centrale de la tête de répartition est notamment donnée par les tronçons latéraux qui se replient au transport. Un tel châssis repliable est appliqué à des largeurs de travail allant jusqu'à 6 mètres. Dans cette zone à forte concentration de composants, l'accès à la tête de répartition et aux tuyaux n'est pas aisé. En effet, il est courant de devoir dégager ou rebrancher un des tuyaux qui n'a pas suivi le mouvement d'ouverture du châssis lors du passage de la position repliée à la position de travail.

On connait également d'autres semoirs monograine repliables ayant une largeur de travail supérieure à 6 mètres. Un tel semoir **ED 602-K** est présenté dans le prospectus AMAZONE ED 02 référencé MI 349 / D 690 (F) 02.05. Le châssis de ce semoir porte douze éléments semeurs qui sont répartis de manière régulière sur toute la largeur de travail. Le semoir réalise aussi la distribution d'engrais via des enfouisseurs qui sont alimentés par des tuyaux raccordés sur une tête de répartition qui est alimentée en engrais par la trémie frontale. Pour faciliter l'accès à la tête de répartition, elle est située à l'avant du châssis, directement derrière le tracteur. Cette zone a été créée pour le placement de la tête de répartition en reculant le châssis et les éléments semeurs par rapport au tracteur. Ce semoir étant porté par l'attelage en trois points du tracteur, le décalage des éléments semeurs vers l'arrière augmente le porte-à-faux. Pour porter et déplacer ce semoir en toute sécurité, il faudra donc utiliser un tracteur de plus forte puissance.

La présente invention a pour but de remédier aux inconvénients précités. Elle doit notamment proposer un semoir de grande largeur de travail avec distribution de produits tels que de l'engrais pour lequel le centre de gravité est proche du tracteur et pour lequel l'accès aux tuyaux est facilité.

A cet effet, une importante caractéristique de l'invention consiste en ce que ladite au moins une tête de répartition s'étende à l'arrière du semoir, derrière lesdits éléments semeurs compte tenu de la direction d'avance. Grâce à cette position de la tête de répartition, le châssis et les éléments semeurs sont maintenus proches de l'attelage en trois points du tracteur. Le porte-à-faux du semoir est réduit. En s'étendant à l'arrière, la tête de répartition est également plus facilement accessible.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue de dessus d'un semoir selon la présente invention dans une configuration de travail,
- la **figure 2** est une vue latérale du semoir de la figure 1 attelé à un tracteur,
- la **figure 3** représente une vue arrière d'une partie du semoir de la figure 1,
- la **figure 4** représente le semoir selon la présente invention au transport selon une vue latérale,
- la **figure 5** est une vue arrière du semoir de la figure 4.

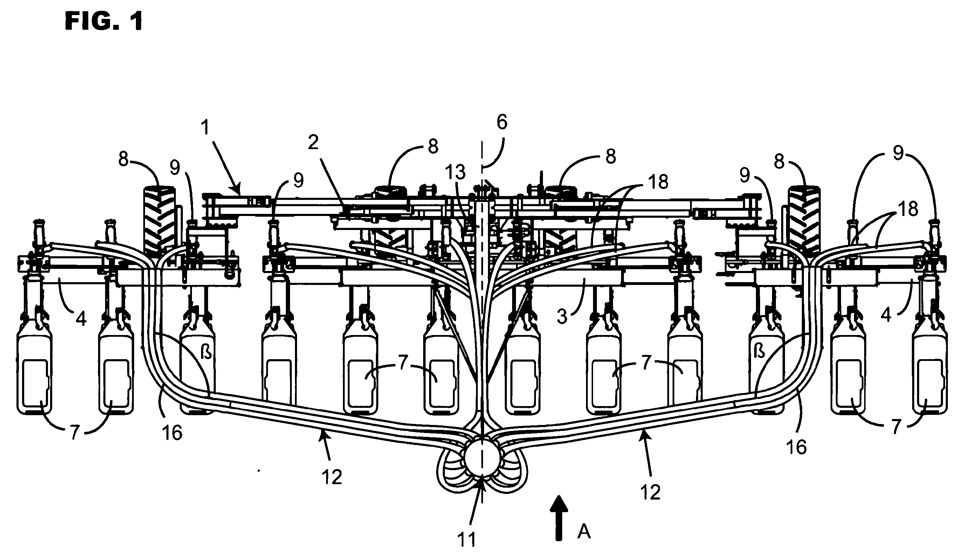

La machine agricole selon l'invention est un semoir (1) appelé semoir monograine ou semoir à éléments. Il travaille sur plusieurs rangées et distribue les graines une à une sur le rang de semis à des écartements constants. La figure 1 montre le semoir (1) en vue de dessus dans sa position de travail. Le semoir (1) présente un châssis (2) repliable composé d'un tronçon central (3) et de deux tronçons latéraux (4). Le tronçon central (3) est disposé horizontalement et transversalement par rapport à la direction de travail du semoir (1). Les tronçons latéraux (4) sont articulés sur le tronçon central (3) de manière à être déplaçables transversalement et verticalement par rapport au tronçon central (3). Au travail, les tronçons latéraux (4) s'étendent de part et d'autre du tronçon central (3) alors qu'au transport, les tronçons latéraux (4) s'étendent sensiblement au-dessus du tronçon central (3). Ce semoir (1) possède donc une largeur de travail importante tout en respectant le gabarit de transport. Chaque tronçon latéral (4) est relié au tronçon central (3) au moyen d'un mécanisme déformable lui permettant de passer d'une position ouverte de travail à une position repliée de transport. Un tracteur (5) est amené à déplacer ce semoir (1) suivant une direction d'avance indiquée par la flèche (A). Dans la suite de la description, les notions suivantes "avant", "arrière" et "devant", "derrière" sont définies par rapport au sens d'avance (A).

Sur le châssis (2) sont répartis, de manière régulière et symétrique par rapport au plan vertical médian (6) du châssis, des éléments semeurs (7). L'écartement entre les éléments semeurs (7) est réglable. Chaque élément semeur (7) possède une trémie, un dispositif de dosage et un dispositif d'implantation. Le montage de l'élément semeur (7) sur le châssis (2) se fait au moyen d'un parallélogramme déformable qui lui permet de se déplacer parallèlement au sol. Afin de garantir un dosage homogène des graines, la vitesse de rotation du dispositif de dosage est avantageusement proportionnelle à la vitesse d'avance du semoir (1). Pour cela, le châssis (2) s'appuie sur le sol au moyen de roues (8).

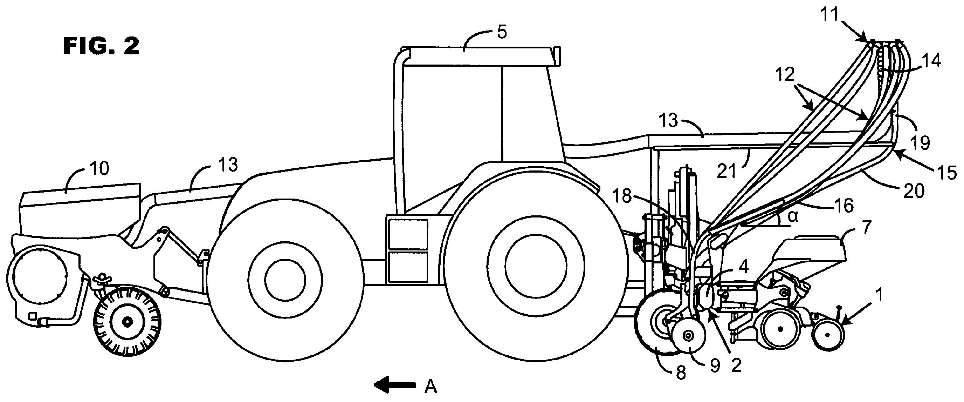

Le semoir (1) de l'invention permet également la distribution de produit par exemple l'engrais de démarrage pour favoriser la germination et le développement du jeune plant. Ce semoir (1) réalise donc le semis et l'apport d'engrais simultanément en un seul passage. La figure 2 est une vue de côté d'un tel semoir. Il comporte à cet effet des enfouisseurs (9) qui déposent l'engrais dans la terre. Ils sont placés à l'avant d'un élément semeur (7) respectif. La distribution d'engrais se fait de manière pneumatique depuis une trémie de stockage (10) via un doseur, une tête de répartition (11) et des tuyaux (12). Les tuyaux (12) sont raccordés sur la tête de répartition (11) et alimentent chacun un enfouisseur (9).

Selon une importante caractéristique de l'invention, ladite au moins une tête de répartition (11) est disposée à l'arrière du semoir (1), derrière lesdits éléments semeurs (7) compte tenu de la direction d'avance (A). Avec une telle disposition le porte-à-faux du semoir est réduit puisque le châssis et les éléments semeurs sont maintenus proches de l'attelage en trois points du tracteur. Avec la disposition arrière de la tête de répartition (11), cette dernière est accessible aussi bien lors du travail que lors du transport du semoir (1). L'accès aux tuyaux (12) est également amélioré. Dans cette position arrière et sensiblement au-dessus des éléments semeurs (7), la tête de répartition (11) est visible par l'utilisateur depuis la cabine du tracteur (5) lors du travail. La position arrière de la tête de répartition (11) est visible sur la figure 1 qui est une vue de dessus ou sur la figure 2 représentant une vue de côté. L'encombrement en longueur du semoir (1) compte tenu de la direction d'avance (A), correspond à la longueur du châssis (2) avec les éléments semeurs (7). La tête de répartition (11) s'étend au-delà des éléments semeurs (7).

Cette disposition arrière de la tête de répartition (11) n'a pratiquement pas d'influence sur la position du centre de gravité du semoir (1). La tête de répartition (11) et les tuyaux (12) sont des pièces creuses avec un poids plutôt négligeable par rapport au poids d'un élément semeur (7) qui peut atteindre 200 kg lorsque sa trémie est remplie de graines de maïs. En disposant le châssis (2) et les éléments semeurs (7) près de l'attelage en trois points du tracteur (5), le porte-à-faux est réduit. Avec les pièces dites "lourdes" disposées plus près du tracteur (5), le centre de gravité du semoir (1) reste proche du tracteur (5).

Le semoir (1) représenté à la figure 1 comporte douze éléments semeurs (7) qui sont répartis sur le châssis (2). Le tronçon central (3) est muni d'éléments d'attelage permettant d'atteler le châssis (2) repliable sur l'attelage en trois points du tracteur agricole (5). Cet attelage permet de transférer le poids et l'effort du semoir (1) sur les roues arrière du tracteur (5). Il s'agit donc d'un semoir du type porté. Le tronçon central (3), qui est fixe, porte six éléments semeurs (7) et chacun des tronçons latéraux (4) porte trois éléments semeurs (7). Devant chaque élément semeur (7) est placé un enfouisseur (9). L'enfouisseur (9) peut être un soc, une dent ou un double disque qui dépose l'engrais sous la ligne de semis et à côté du rang. D'après la figure 2, le tracteur porte à l'arrière le semoir (1) et à l'avant la trémie de stockage (10). Avec cette trémie en position frontale, la répartition de la charge sur le tracteur (5) est idéale. La maniabilité du tracteur (5) en bout de champ et en coteaux est améliorée. La position frontale de l'engrais et l'allégement du poids du semoir équilibrent le tracteur (5). La compaction des sols est aussi réduite car la charge sur l'essieu arrière du tracteur (5) a baissé. Grâce à l'utilisation d'une trémie frontale pour le stockage d'engrais, l'autonomie du semoir (1) est plus grande et le débit de chantier est plus important. Le remplissage de la trémie est aisé puisque l'accessibilité à la trémie en position frontale est plus facile.

On remarque donc que la trémie de stockage (10) s'étend à l'avant de la tête de répartition (11). Le transport de l'engrais vers l'arrière se fait au moyen d'une conduite d'acheminement (13) reliant la trémie de stockage (10) à la tête de répartition (11). Ainsi, l'engrais contenu dans la trémie de stockage (10) est calibré par le doseur puis mélangé avec de l'air produit par une soufflerie pour être envoyé vers la tête de répartition (11). La tête de répartition (11) s'étend à la verticale d'une colonne annelée (14) qui conduit le mélange air / engrais à la tête de répartition (11). Puis l'engrais, distribué de manière homogène, est transporté vers chaque enfouisseur (9) via le tuyau (12) respectif. Le nombre de tuyaux (12) correspond donc au nombre de sorties de la tête de répartition (11) qui correspond au nombre d'enfouisseurs (9).

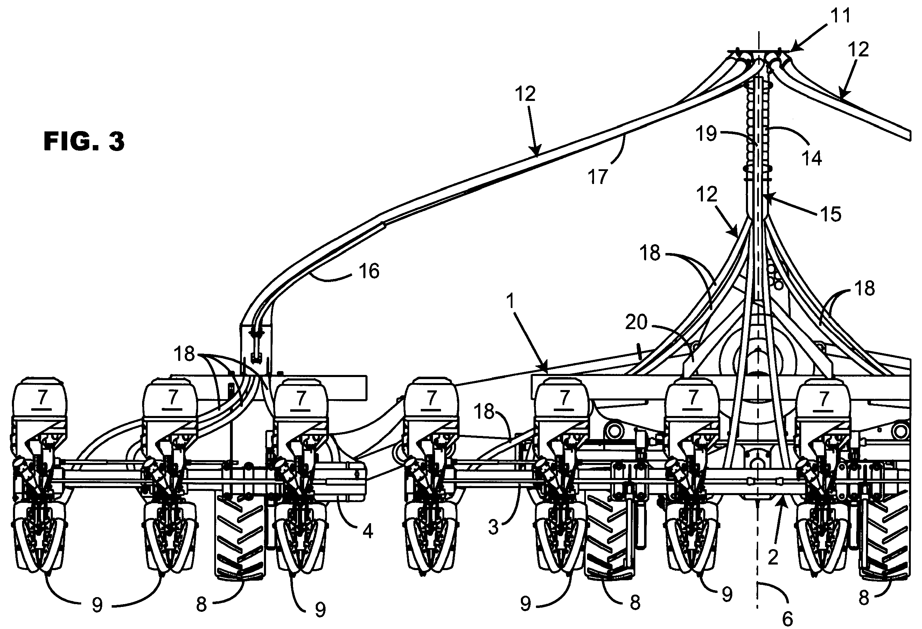

Dans cet exemple de réalisation, la distribution des engrais se fait de manière centralisée avec un doseur unique et une tête de répartition (11) avec douze sorties. La tête de répartition (11) alimente à la fois les enfouisseurs (9) du tronçon central (3) ainsi que ceux des tronçons latéraux (4). Lorsque le semoir présente un nombre d'enfouisseurs plus important que le nombre de sorties de la tête de répartition, on utilisera deux voire plus de têtes de répartition (11). La figure 3 représente le semoir (1) dans une position de travail avec une partie des tuyaux (12) reliant la tête de répartition (11) aux enfouisseurs (9). Pour assurer une hauteur de chute suffisante et pour garantir une distribution uniforme des graines, la tête de répartition (11) doit s'étendre à une certaine hauteur. La tête de répartition (11) s'étend ainsi au-dessus des éléments semeurs (7). Les tuyaux (12) ont une trajectoire du haut vers le bas (figure 2) compte tenu de la direction d'avance (A). Pour un transport optimal de l'engrais vers les enfouisseurs (9), la trajectoire des tuyaux (12) est, comme visible à la figure 3, plus ou moins directe et orientée en descente de la tête de répartition (11) jusqu'aux enfouisseurs (9). Les tuyaux (12) s'étendent globalement au-dessus des éléments semeurs (7).

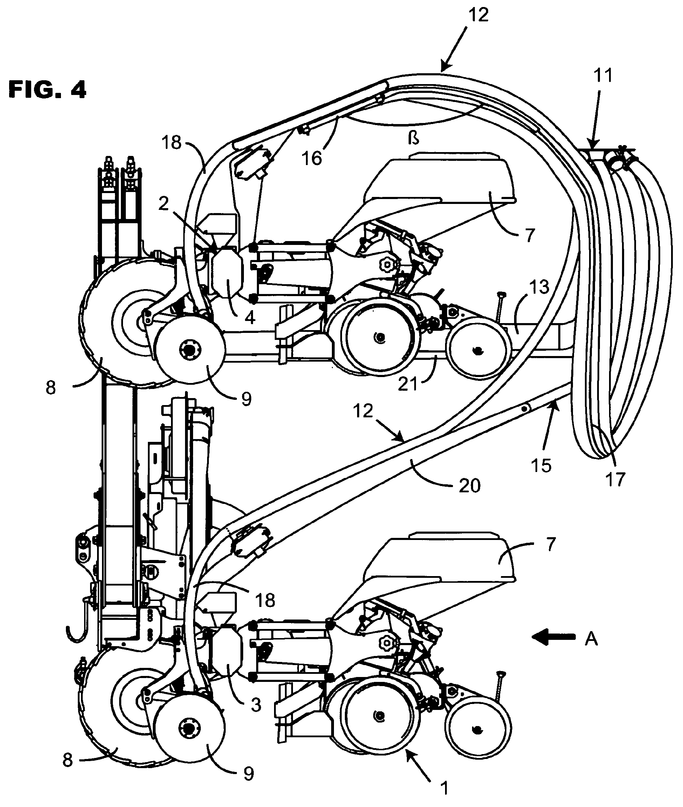

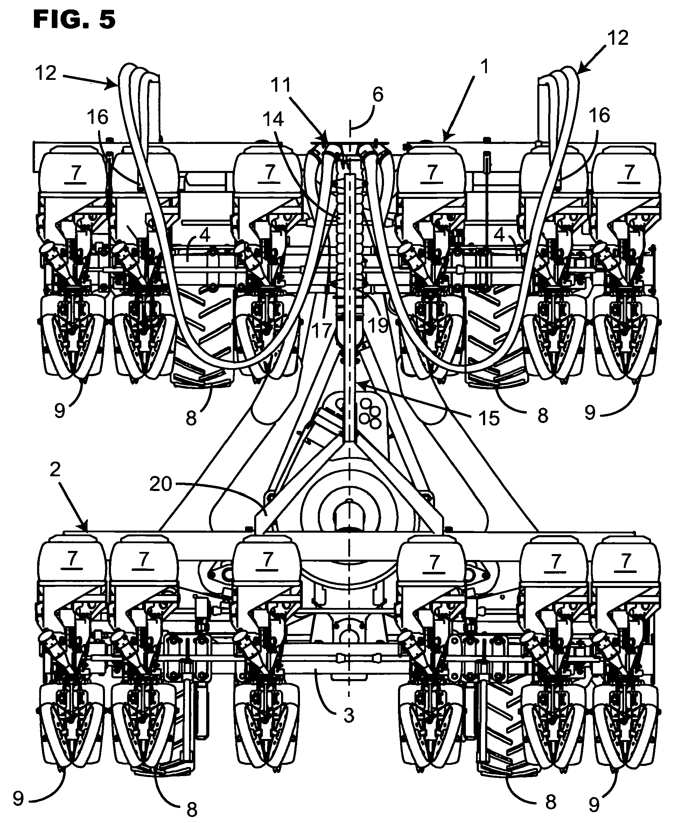

Les figures 4 et 5 représentent le semoir selon l'invention dans sa position de transport respectivement selon une vue latérale et une vue arrière. Grâce au châssis (2) repliable, le semoir (1) de grande largeur respecte le gabarit de transport maximum autorisé pour la circulation sur les routes. Ce gabarit de transport est de 3 mètres en largeur et de 4 mètres en hauteur pour la France. Le tronçon central (3) et les tronçons latéraux (4) sont formés chacun d'une poutre transversale télescopique permettant de réduire l'encombrement en largeur. Sur ces figures, on constate que la tête de répartition (11) s'étend en-dehors de la zone de déplacement des tronçons latéraux (4). La tête de répartition (11) et les tuyaux (12) s'étendent donc dans une zone sans interférence avec les éléments semeurs (7) que ce soit au travail ou au transport.

Dans l'exemple représenté aux figures 1, 2 et 4, la tête de répartition (11) est liée au châssis (2) au moyen d'un support (15). Ce support (15) est de préférence monté sur le tronçon central (3) qui est fixe. Le support (15) s'étend sensiblement dans le plan vertical médian (6) du semoir (1) ou du châssis (2). Sa fonction est de maintenir la tête de répartition (11) à une certaine hauteur pour que la chute de l'engrais soit suffisante afin d'assurer une distribution uniforme. Le support (15) s'étend globalement dans la direction d'avance (A), il présente une partie verticale (19) qui est destinée à supporter la colonne annelée (14) et une partie inclinée (20) vers le tronçon central (3). Le support (15) présente aussi une partie sensiblement horizontale (21) permettant de soutenir une partie de la conduite d'acheminement (13) ainsi que le coude sous la colonne annelée (14). La tête de répartition (11) s'étend, avantageusement, dans l'encombrement en hauteur du semoir (1) lors du transport. Le semoir représenté à la figure 1 est un semoir avec un nombre de rangs pair ce qui permet de placer la tête de répartition (11) en position centrale du châssis (2). La disposition et la longueur des différents tuyaux (12) alimentant les enfouisseurs (9) peuvent être symétriques par rapport au plan vertical médian (6). Le support (15) de la tête de répartition (11) s'étend donc aussi dans le plan vertical médian (6).

Afin de permettre une ouverture en position de travail respectivement un repliage pour le transport sans interférence avec les parties en déplacement, les tuyaux (12) sont guidés sur une partie de leur longueur. Ce guidage permet de prévenir les coincements avec les éléments semeurs (7) lors du déplacement des tronçons latéraux (4). La longueur de guidage est donc sensiblement égale à l'encombrement en longueur des éléments semeurs (7). La trajectoire des tuyaux (12) est avantageusement donnée par un guide mobile (16) de forme incurvée. La base du guide mobile (16) est liée à la poutre du tronçon latéral (4). Elle s'étend sensiblement perpendiculairement à ladite poutre en vue de dessus en étant inclinée d'un angle (α) aigu par rapport à l'horizontale en vue de côté. A la lumière de la figure 1, on remarque qu'un guide mobile (16) permet le guidage de la trajectoire des trois tuyaux (12) de chaque tronçon latéral (4). La forme incurvée du guide mobile (16) est avantageusement orientée vers la tête de répartition (11) dans la position de travail du semoir (1). L'angle d'ouverture (β) du guide mobile (16) entre sa base et sa partie incurvée est, de préférence, un angle important supérieur ou égale à 90°, de préférence de 120°. En étant ainsi conçu et orienté, le guide mobile (16) donne une trajectoire plus ou moins directe des tuyaux (12) ce qui favorise l'écoulement de l'engrais vers les enfouisseurs (9). D'après la figure 3, les tuyaux (12) présentent une longueur telle que chaque tuyau (12) soit plus ou moins tendu. Les tuyaux (12) s'étendent sensiblement au-dessus des éléments semeurs (7).

D'après les figures, au moins un guide mobile (16) permet le guidage des tuyaux (12) alimentant les enfouisseurs (9) montés sur les tronçons latéraux (4). Chaque guide mobile (16) pivote librement autour de son axe, lequel est dirigé sensiblement selon l'angle (α) aigu par rapport à l'horizontale. De manière avantageuse, le guide mobile (16) est réalisé par un tube cintré de section ronde. Il peut donc pivoter sur lui-même de manière à ce que les tuyaux (12) passent derrière les éléments semeurs (7) lors du repliage, compte tenu de la direction d'avance (A). Le pivotement du guide mobile (16) se fait par rapport à l'axe de sa base, laquelle est orientée par rapport à la poutre du tronçon latéral (4). Lors du repliage, chaque tronçon latéral (4) se rapproche de la tête de répartition (11) et par conséquent les tuyaux (12) se détendent et se replient en formant une boucle. Lorsque la tension des tuyaux (12) diminue, le guide mobile (16) pivote sous l'effet de la gravité jusqu'à s'étendre dans un plan vertical au transport. Grâce au pivotement du guide mobile (16), les tuyaux (12) s'étendent hors de la zone de déplacement des éléments semeurs (7) lors de l'ouverture respectivement du repliage du châssis (2). On peut voir sur la figure 4, que grâce à l'angle d'ouverture (β) de la forme incurvée du guide mobile (16), les tuyaux (12) s'étendent derrière les éléments semeurs (7), sans risque d'interférence avec des équipements montés les éléments semeurs (7). Le guide mobile (16) impose donc l'orientation des tuyaux (12) au travail, au transport et durant le repliage ou l'ouverture afin de prévenir les coincements et/ou interférences lors du déplacement des tronçons latéraux (4).

Selon une alternative, le guide mobile (16) est lié à ladite poutre du tronçon latéral (4) au moyen d'un support intermédiaire.

Pour assurer une tension minimum sur les tuyaux (12) dans la zone entre la tête de répartition (11) et le guide mobile (16), ils sont guidés et tendus grâce à un guide flexible (17). Ce guide flexible (17) apporte une souplesse permettant aux tuyaux (12) de passer d'une position de travail à une position de transport et inversement. Il est avantageusement composé d'une chaîne associée à un ressort (non représenté). Ce dernier est lié à la colonne annelée (14). Il s'agit d'un ressort de traction. La chaîne étant liée au guide mobile (16). Grâce à la chaîne associée au ressort, une tension est exercée sur les tuyaux (12). Une longueur trop importante entraînerait un fléchissement du tuyau (12). Ce fléchissement provoquant une accumulation d'engrais dans le tuyau (12) et par conséquent un mauvais écoulement de l'engrais vers l'enfouisseur (9). La tension exercée sur les tuyaux (12) est avantageusement réglable grâce à la chaîne. Les tuyaux (12) sont généralement des tuyaux souples annelés et la chaîne permet de soutenir ces tuyaux (12) souples. Elle permet aussi de rattraper l'augmentation de longueur que peuvent prendre les tuyaux (12) avec le temps. Le guide flexible (17) permet la formation de la boucle lors du repliage. Lors de l'ouverture du châssis (2), le pivotement du guide mobile (16) est avantageusement donné par les tuyaux (12) et/ou par la chaîne.

Afin de s'adapter aux différents réglages d'écartement entre les éléments semeurs (7), chaque tuyau (12) comporte également une portion flexible (18) du côté de l'enfouisseur (9) correspondant.

Selon une alternative, le semoir (1) de l'invention pourra aussi être relié derrière une remorque qui est liée au tracteur (5). Le semoir est alors porté par la remorque.

Avec un semoir à nombre de rangs impair, un des éléments semeurs s'étend dans le plan vertical médian (6). La tête de répartition (11) et les tuyaux (12) alimentant les enfouisseurs (9) montés sur le tronçon central (3) peuvent être décalés par rapport au plan vertical médian (6).

Il est bien évident que l'invention n'est pas limitée aux modes de réalisation décrits ci-dessus et représentés sur les dessins annexés. Des modifications restent possibles dans la limite définie par les revendications suivantes.

## Revendications

1. Semoir monograine (1) avec un châssis (2) repliable composé d'un tronçon central (3) disposé transversalement par rapport à la direction de travail et de deux tronçons latéraux (4) articulés sur le tronçon central (3), des éléments semeurs (7) étant répartis de manière régulière sur ledit châssis (2), ledit semoir (1) comportant des enfouisseurs (9) pour la distribution de produit s'étendant sensiblement à l'avant d'un élément semeur (7) respectif, au moins une tête de répartition (11) et des tuyaux (12) raccordés sur ladite au moins une tête de répartition (11) et aboutissant auxdits enfouisseurs (9), ***caractérisé en ce que*** ladite au moins une tête de répartition (11) est disposée à l'arrière du semoir (1), derrière lesdits éléments semeurs (7) compte tenu de la direction d'avance (A).

2. Semoir selon la revendication 1, ***caractérisé en ce que*** ladite au moins une tête de répartition (11) s'étend en dehors de la zone de déplacement des éléments semeurs (7) entre une position de travail et une position de transport.

3. Semoir selon la revendication 1 ou 2, ***caractérisé en ce qu'**au* moins un guide mobile (16) permet le guidage desdits tuyaux (12) alimentant lesdits enfouisseurs (9) montés sur lesdits tronçons latéraux (4).

4. Semoir selon la revendication 3, ***caractérisé en ce que*** chaque guide mobile (16) présente une base qui est liée à la poutre dudit tronçon latéral (4) et s'étend sensiblement perpendiculairement à ladite poutre en étant inclinée d'un angle (α) aigu par rapport à l'horizontale.

5. Semoir selon la revendication 3 ou 4, ***caractérisé en ce que*** chaque guide mobile (16) présente une forme incurvée dirigée vers ladite tête de répartition (11) dans la position de travail et ayant un angle d'ouverture (β) supérieur à 90°.

6. Semoir selon l'une quelconque des revendications 3 à 5, ***caractérisé en ce que*** chaque guide mobile (16) pivote librement autour de son axe, l'axe étant dirigé sensiblement selon l'angle (α) aigu par rapport à l'horizontale.

7. Semoir selon l'une quelconque des revendications 3 à 6, ***caractérisé en ce que*** lesdits tuyaux (12) s'étendent derrière lesdits éléments semeurs (7) compte tenu de la direction d'avance (A) lors du déplacement desdits tronçons latéraux (4) vers la position de transport.

8. Semoir selon l'une quelconque des revendications 3 à 7, ***caractérisé en ce* qu'**un guide flexible (17) soutient lesdits tuyaux (12) entre ladite tête de répartition (11) et un guide mobile (16) respectif.

9. Semoir selon l'une quelconque des revendications 1 à 8, ***caractérisé en ce que*** ladite au moins une tête de répartition (11) s'étend sensiblement dans le plan vertical médian (6) dudit semoir (1).

10. Semoir selon l'une quelconque des revendications 1 à 9, ***caractérisé en ce que*** ladite au moins une tête de répartition (11) s'étend dans l'encombrement en hauteur du semoir (1) lors du transport.

## Patentansprüche

1. Einzelkornsämaschine (1) mit einem klappbarem Rahmen (2), der aus einem zentralen Abschnitt (3), der in Bezug auf die Arbeitsvorschubrichtung quer angeordnet ist, und aus zwei seitlichen Abschnitten (4), die an dem zentralen Abschnitt (3) angelenkt sind, gebildet ist, wobei Säelemente (7) auf dem Rahmen (2) regelmäßig verteilt sind, wobei die Sämaschine (1) Einleger (9) für die Produktverteilung, die sich im Wesentlichen am vorderen Teil eines jeweiligen Säelements (7) erstrecken, mindestens einen Verteilerkopf (11) und Schläuche (12), die an den mindestens einen Verteilerkopf (11) angeschlossen sind und in die Einleger (9) münden, umfasst, ***dadurch gekennzeichnet,* dass** der mindestens eine Verteilerkopf (11) am hinteren Teil der Sämaschine (1) angeordnet ist, hinter den Säelementen (7) unter Berücksichtigung der Vorschubrichtung (A).

2. Sämaschine nach Anspruch 1, ***dadurch gekennzeichnet,* dass** sich der mindestens eine Verteilerkopf (11) außerhalb des Bewegungsbereichs der Säelemente (7) zwischen einer Arbeitsstellung und einer Transportstellung erstreckt.

3. Sämaschine nach Anspruch 1 oder 2, ***dadurch gekennzeichnet,* dass** mindestens ein beweglicher Lenker (16) die Führung der Schläuche (12) ermöglicht, welche die Einleger (9) speisen, die auf den seitlichen Abschnitten (4) befestigt sind.

4. Sämaschine nach Anspruch 3, ***dadurch gekennzeichnet,* dass** jeder bewegliche Lenker (16) eine Basis aufweist, die mit dem Träger des seitlichen Abschnitts (4) verbunden ist und sich im Wesentlichen senkrecht zum Träger erstreckt, wobei sie in einem spitzen Winkel (α) in Bezug auf die Horizontale geneigt ist.

5. Sämaschine nach Anspruch 3 oder 4, ***dadurch gekennzeichnet,* dass** jeder bewegliche Lenker (16) eine gekrümmte Form aufweist, die zum Verteilerkopf (11) in der Arbeitsstellung gerichtet ist und einen Öffnungswinkel (β) von mehr als 90° hat.

6. Sämaschine nach irgend einem der Ansprüche 3 bis 5, ***dadurch gekennzeichnet,* dass** jeder bewegliche Lenker (16) frei um seine Achse schwenkt, wobei die Achse im Wesentlichen gemäß dem spitzen Winkel (α) in Bezug auf die Horizontale ausgerichtet ist.

7. Sämaschine nach irgend einem der Ansprüche 3 bis 6, ***dadurch gekennzeichnet,* dass** sich die Schläuche (12) hinter den Säelementen (7) erstrecken, unter Berücksichtigung der Vorschubrichtung (A) beim Bewegen der seitlichen Abschnitte (4) in die Transportstellung.

8. Sämaschine nach irgend einem der Ansprüche 3 bis 7, ***dadurch gekennzeichnet,* dass** ein elastischer Lenker (17) die Schläuche (12) zwischen dem Verteilerkopf (11) und einem jeweiligen beweglichen Lenker (16) unterstützt.

9. Sämaschine nach irgend einem der Ansprüche 1 bis 8, ***dadurch gekennzeichnet,* dass** sich der mindestens eine Verteilerkopf (11) im Wesentlichen in der vertikalen Mittelebene (6) der Sämaschine (1) erstreckt.

10. Sämaschine nach irgend einem der Ansprüche 1 bis 9, ***dadurch gekennzeichnet,* dass** sich der mindestens eine Verteilerkopf (11) in der Höhenabmessung der Sämaschine (1) beim Transport erstreckt.

## Claims

1. Single seeder (1) with a foldable chassis (2) composed of a central section (3) arranged transversely with respect to the direction of work, and of two lateral sections (4) articulated on the central section (3), seeder elements (7) being distributed in a regular manner on the said chassis (2), the said seeder (1) including burying coulters (9) for the distribution of product extending substantially at the front of a respective seeder element (7), at least one distribution head (11) and pipes (12) connected on the said at least one distribution head (11) and ending at the said burying coulters (9), ***characterized in* that** the said at least one distribution head (11) is arranged at the rear of the seeder (1), behind the said seeder elements (7), taking into account the direction of advance (A).

2. Seeder according to Claim 1, ***characterized in* that** the said at least one distribution head (11) extends beyond the displacement zone of the seeder elements (7) between a work position and a transport position.

3. Seeder according to Claim 1 or 2, ***characterized in* that** at least one movable guide (16) allows the guiding of the said pipes (12) supplying the said burying coulters (9) mounted on the said lateral sections (4).

4. Seeder according to Claim 3, ***characterized in* that** each movable guide (16) has a base which is connected to the beam of the said lateral section (4) and extends substantially perpendicularly to the said beam, being inclined by an acute angle (α) with respect to the horizontal.

5. Seeder according to Claim 3 or 4, ***characterized in* that** each movable guide (16) has a curved shape directed towards the said distribution head (11) in the work position and having an opening angle (β) greater than 90°.

6. Seeder according to anyone of Claims 3 to 5, ***characterized in* that** each movable guide (16) pivots freely about its axis, the axis being directed substantially according to the acute angle (α) with respect to the horizontal.

7. Seeder according to anyone of Claims 3 to 6, ***characterized in* that** the said pipes (12) extend behind the said seeder elements (7), taking into account the direction of advance (A) during the displacement of the said lateral sections (4) towards the transport position.

8. Seeder according to anyone of Claims 3 to 7, ***characterized in* that** a flexible guide (17) supports the said pipes (12) between the said distribution head (11) and a respective movable guide (16).

9. Seeder according to anyone of Claims 1 to 8, ***characterized in* that** the said at least one distribution head (11) extends substantially in the median vertical plane (6) of the said seeder (1).

10. Seeder according to anyone of Claims 1 to 9, ***characterized in* that** the said at least one distribution head (11) extends in the vertical space occupied by the seeder (1) during transport.
